(19) Europäisches Patentamt
European Patent Office
Office européen des brevets

(11) EP 3 956 709 B1

(12) # FASCICULE DE BREVET EUROPEEN

(45) Date de publication et mention de la délivrance du brevet:
**09.07.2025 Bulletin 2025/28**

(21) Numéro de dépôt: **20719590.0**

(22) Date de dépôt: **06.04.2020**

(51) Classification Internationale des Brevets (IPC):
***G02B 19/00*** *(2006.01)* ***F21S 41/147*** *(2018.01)*
***F21S 41/26*** *(2018.01)* ***F21S 41/27*** *(2018.01)*

(52) Classification Coopérative des Brevets (CPC):
**G02B 19/0014; F21S 41/26; F21S 41/27; G02B 19/0061;** F21S 41/147

(86) Numéro de dépôt international:
**PCT/EP2020/059821**

(87) Numéro de publication internationale:
**WO 2020/212191 (22.10.2020 Gazette 2020/43)**

(54) **SYSTEME OPTIQUE**

OPTISCHES SYSTEM

OPTICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2019 FR 1904234**

(43) Date de publication de la demande:
**23.02.2022 Bulletin 2022/08**

(73) Titulaire: **Valeo Vision**
**93012 Bobigny Cedex (FR)**

(72) Inventeurs:
- **MEYRENAUD, Jean Luc**
  **93012 BOBIGNY Cedex (FR)**
- **BEEV, Kostadin**
  **93012 BOBIGNY Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
**EP-A1- 2 770 248**
**CN-Y- 201 166 288**
**US-A1- 2016 126 425**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

EP 3 956 709 B1

## Description

L'invention concerne un dispositif optique pour l'éclairage des flancs d'un véhicule.

Avec le développement du véhicule automobile autonome, il devient nécessaire d'améliorer l'assistance à la conduite, dans toutes les conditions d'éclairage, notamment pour gérer différentes fonctions particulières de conduite parmi lesquelles :

- le maintien sur une voie, aussi dénommé par l'appellation anglo-saxonne « lane keeping », pour permettre à un véhicule de suivre sa voie sur une route, notamment en détectant et signalant au conducteur toute déviation de trajectoire ;
- le centrage sur une voie, aussi dénommé par l'appellation anglo-saxonne « lane centering », qui vient en complément de la fonction précédente, et permet plus précisément de maintenir le véhicule de manière autonome au centre de sa voie,
- le changement de voie, aussi dénommé par l'appellation anglo-saxonne « lane changing », pour permettre à un véhicule de changer de voie, par exemple en vue d'un dépassement,
- le freinage d'urgence, aussi dénommé par l'appellation anglo-saxonne « automating emergency breaking », ou plus simplement par le sigle AEB,
- la manœuvre d'évitement d'urgence, aussi dénommé par l'appellation anglo-saxonne « automating emergency steering », ou plus simplement par le sigle AES, qui permet d'éviter un obstacle présent sur sa voie,
- l'assistance au parking, et le parking autonome.

Dans ces différentes fonctions, le dispositif d'assistance a besoin de recevoir des informations en entrée, parmi lesquelles notamment la détection des marquages au sol, comme les lignes délimitant les voies, et/ou la présence des éventuels obstacles sur la route. Cette détection doit pouvoir être réalisée dans toutes les conditions, et notamment la nuit.

En remarque, l'éclairage existant sur un véhicule permet d'éclairer la route devant le véhicule à partir d'une distance de deux mètres sur sa propre voie et de cinq mètres sur les voies adjacentes.

Cependant, l'éclairage de la partie latérale du véhicule est plus délicate car l'éclairage doit couvrir l'intégralité d'une surface rectangulaire adjacente au véhicule, s'étendant depuis quelques centimètres du véhicule à plusieurs mètres et s'étendant sur une longueur d'une dizaine de mètres. L'étendue angulaire de cette zone à éclairer rend très difficile l'éclairage de toute cette surface de manière homogène.

L'art antérieur est représenté par le document US 2016/126425 A1 et EP 2 770 248 A1.

Ces contraintes font qu'il est aujourd'hui délicat, voire impossible, de pouvoir détecter certains marquages au sol ou obstacles à proximité d'un véhicule, notamment dans les régions latérales, ce qui ne permet pas d'offrir un dispositif d'assistance remplissant les fonctions susmentionnées nécessaires à un véhicule autonome.

Le but de l'invention est de fournir un dispositif et un procédé d'éclairage d'une région latérale d'un véhicule remédiant aux inconvénients ci-dessus et améliorant les dispositifs et procédés d'assistance à la conduite d'un véhicule automobile, lui permettant notamment de remplir les fonctions d'assistance explicitées ci-dessus, pour être apte à l'assistance d'un véhicule autonome.

En complément, le but de l'invention est de fournir une solution d'éclairage et d'assistance à la conduite d'un véhicule automobile simple, sans surcoût trop important et fiable.

L'invention est définie par les revendications.

A cet effet, l'invention porte sur un dispositif optique pour véhicule. Ledit dispositif optique comprend au moins une lentille comprenant un axe optique et un dioptre de sortie et un dioptre d'entrée. Ledit dispositif optique comprend également une source de lumière agencée pour émettre de la lumière vers le dioptre d'entrée de la au moins une lentille, la au moins une lentille présentant un foyer objet situé sensiblement sur le dioptre d'entrée de la lentille, au niveau de son axe optique. Une section du dioptre de sortie par un plan vertical parallèle à l'axe optique de la au moins une lentille comprend un ou plusieurs arcs d'ellipse ou sensiblement d'ellipse, modifiés par rapport à une forme elliptique de référence dans laquelle tous les rayons issus de la source de lumière seraient émis parallèlement à l'axe optique de la au moins une lentille en sortie d'un dioptre de sortie de référence, cette modification étant telle que tout ou partie des rayons émis par la au moins une lentille du dispositif optique sont inclinés de manière similaire dans une direction non parallèle à l'axe optique, de manière adaptée pour un éclairage du sol lorsque le dispositif optique est agencé au sein d'un véhicule automobile avec son axe optique horizontal.

Dans un mode de réalisation, une section de la partie supérieure du dioptre de sortie de la au moins une lentille par un plan vertical parallèle à l'axe optique de la au moins une lentille comprend un ou plusieurs arcs d'ellipse ou sensiblement d'ellipse, modifiés par rapport à une forme elliptique de référence dans laquelle tous les rayons seraient émis parallèlement à l'axe optique de la au moins une lentille, de sorte que tout ou partie des rayons émis par la partie supérieure de la au moins une lentille sont inclinés vers l'axe optique de la au moins une lentille, et en ce qu'une section de la partie inférieure du dioptre de sortie de la au moins une lentille par un plan vertical parallèle à l'axe optique de la au moins une lentille comprend un ou plusieurs arcs d'ellipse ou sensiblement d'ellipse, modifiés par rapport à une forme elliptique de référence dans laquelle tous les rayons seraient émis parallèlement à l'axe optique de la au moins une lentille, de sorte que tout ou partie des rayons émis par la partie inférieure de la au moins une lentille sont inclinés de sorte à s'éloigner de l'axe optique de la au moins une lentille. Dans un mode de réalisation, une section de la partie supérieure du dioptre de sortie de la au moins une lentille par un plan vertical parallèle à l'axe optique de la au moins une lentille comprend un ou plusieurs arcs d'ellipse ou sensiblement d'ellipse, inscrit(s) entre un contour elliptique de référence par lequel tous les rayons seraient émis parallèlement à l'axe optique de la au moins une lentille et un contour elliptique obtenu par une réduction de 30% de la longueur du petit axe du contour elliptique de référence, et/ou en ce qu'une section de la partie inférieure du dioptre de sortie de la au moins une lentille par un plan vertical parallèle à l'axe optique de la au moins une lentille comprend un ou plusieurs arcs d'ellipse ou sensiblement d'ellipse, inscrit(s) entre un contour elliptique de référence par lequel tous les rayons seraient émis parallèlement à l'axe optique de la au moins une lentille et un contour elliptique obtenu par une augmentation de 30% de la longueur du petit axe du contour elliptique de référence.

Dans un mode de réalisation, une section de la partie supérieure du dioptre de sortie de la au moins une lentille par un plan vertical parallèle à l'axe optique de la au moins une lentille comprend un arc d'ellipse supérieur et un arc d'ellipse inférieur, séparés par une frontière continue au niveau de leur intersection avec l'axe optique, les deux arcs d'ellipse présentant un même centre et un même foyer confondu avec le foyer objet de la lentille, et caractérisé en ce que l'arc d'ellipse supérieur et/ou l'arc d'ellipse inférieur présente une excentricité permettant de dévier les rayons lumineux issus de la source de lumière de manière à respectivement les incliner vers et /ou les incliner à l'opposé de l'axe optique.

Dans un mode de réalisation, la longueur du petit axe de l'arc d'ellipse supérieur est inférieure de 5 à 30% à la longueur du petit axe d'un arc d'ellipse de référence.

Dans un mode de réalisation, la longueur du petit axe de l'arc d'ellipse inférieur est supérieure de 5 à 30% à une longueur du petit axe d'un arc d'ellipse de référence.

Dans un mode de réalisation, les rayons issus du dioptre de sortie sont tous orientés vers un plan horizontal parallèle à l'axe optique, aptes à éclairer un sol sur lequel reposerait un véhicule sur lequel serait monté le dispositif optique.

Dans un mode de réalisation, le dioptre de sortie est agencé perpendiculairement à l'axe optique.

Dans un mode de réalisation, la source de lumière est disposée à proximité du dioptre d'entrée, la distance entre la source de lumière et le dioptre d'entrée étant notamment inférieure à 10mm.

Dans un mode de réalisation, la source de lumière est accolée au dioptre d'entrée.

Dans un mode de réalisation, la lentille comprend, entre le dioptre d'entrée et le dioptre de sortie, une face latérale, de préférence agencée pour contenir la totalité du cône d'émission formée par les rayons lumineux émis par la source de lumière et se propageant dans la lentille.

Dans un mode de réalisation, une section du dioptre de sortie par un plan horizontal contenant l'axe optique présente une forme sensiblement parabolique.

L'invention concerne également un système d'éclairage destiné à être monté sur le bas de caisse d'un véhicule, notamment d'un véhicule automobile, comprenant plusieurs dispositifs optiques selon l'invention.

L'invention concerne aussi un véhicule automobile, notamment autonome ou semi-autonome, comprenant un ou plusieurs dispositifs optiques selon l'invention ou un ou plusieurs systèmes d'éclairage selon l'invention, agencés en partie basse et latérale du véhicule automobile.

Les dessins annexés représentent, à titre d'exemple, un mode de réalisation d'un dispositif optique selon l'invention et d'un véhicule comprenant un tel module.

[Fig. 1] représente une vue de dessus d'un dispositif optique selon un mode de réalisation de l'invention.
[Fig. 2] représente une vue de côté d'un dispositif optique selon un mode de réalisation de l'invention.
[Fig. 3] représente une vue de côté d'un dispositif optique de référence.
[Fig. 4] représente une vue de côté d'un dispositif optique selon un premier mode de réalisation ne représentant pas 'invention.
[Fig. 5] représente une vue de côté d'un dispositif optique selon un deuxième mode de réalisation ne représentant pas l'invention.
[Fig. 6] représente une vue de côté d'un dispositif optique selon un troisième mode de réalisation représentant l'invention.
[Fig. 7] représente une vue de dessus d'un mode de réalisation d'un système d'éclairage selon la présente invention, comprenant plusieurs dispositifs optique vue de côté d'un dispositif optique.

Par convention, nous utiliserons par la suite les trois directions x, y, z en relation avec un véhicule positionné sur un plan horizontal, au sein duquel un dispositif optique selon l'invention est destiné à être intégré, au niveau d'un flanc latéral, pour procéder à l'éclairage de la zone latérale dudit véhicule automobile. La direction y représente la direction longitudinale, orientée de l'arrière vers l'avant du véhicule automobile. La direction x correspond à la direction transversale, orientée de la gauche vers la droite. La direction z correspond à la direction verticale. Les directions x, y définissent ainsi un plan horizontal. Ces directions seront ainsi utilisées de manière étendue pour décrire un dispositif optique seul, en référence à sa future position au sein d'un véhicule automobile.

Un exemple d'une lentille 2 d'un dispositif optique 1 selon un mode de réalisation est décrit ci-après en référence aux figures 1, 2 et 4 à 6. La lentille 2 comprend un dioptre d'entrée 3, un dioptre de sortie 4 et une face latérale 7 agencée entre les deux dioptres. Les dioptres comprennent un point central autour duquel ils sont agencés de manière sensiblement symétrique. L'axe reliant ces deux points centraux représente un axe optique X de la lentille.

Le dispositif optique 1 selon le mode de réalisation comprend au moins une source de lumière 5 capable d'émettre de la lumière vers le dioptre d'entrée 3 de la lentille 2. De préférence, la source de lumière 5 et la lentille 2 sont agencées de manière à ce que les rayons lumineux provenant de la source de lumière et atteignant la lentille se propagent en ligne droite, ces rayons ne subissant pas de réfraction sur leur trajet entre la source de lumière 5 et le dioptre de sortie 4 de la lentille 2. Le dioptre de sortie 4 oriente ensuite ces rayons lumineux vers l'extérieur. Selon le mode de réalisation, la lentille 2, plus particulièrement le dioptre de sortie 4, est conçue pour permettre l'éclairage de la zone latérale d'un véhicule automobile, à proximité d'un véhicule automobile, pour respecter la zone d'éclairage ciblée et rappelée précédemment.

D'autre part, la lentille, et particulièrement la forme du dioptre de sortie 4, est conçue de sorte à permettre la réalisation d'un dispositif optique de faible encombrement. A titre d'exemple, la distance séparant la source de lumière 5 du dioptre d'entrée 3 peut être inférieure ou égale à 10 mm, voire inférieure ou égale à 3 mm. Préférentiellement, la source de lumière 5 est accolée au dioptre d'entrée 3. Alternativement, le dioptre d'entrée 3 peut former une cavité recevant au moins partiellement la source de lumière 5.

Selon le mode de réalisation, le dioptre de sortie 4 présente une forme sensiblement parabolique (une portion de parabole) par une coupe par un plan horizontal, notamment par un plan horizontal comprenant l'axe optique X, comme cela sera détaillé par la suite. Cette forme permet une bonne répartition droite et gauche des rayons lumineux quittant le dioptre de sortie 4, c'est-à-dire une bonne répartition de l'éclairage selon la direction longitudinale y d'un véhicule automobile. En variante, cette forme obtenue par une coupe par un plan horizontal pourrait être différente. En complément, le dioptre de sortie 4 présente une forme proche d'une ellipse (plus précisément selon une ou plusieurs portions d'ellipse ou arcs d'ellipse) par une coupe par un plan vertical, notamment par un plan vertical comprenant l'axe optique X de la lentille 2. Cette forme est plus particulièrement conçue pour une orientation des rayons lumineux vers le sol, à proximité du véhicule, et selon une portée maximale prédéfinie pour éclairer la zone utile au bon fonctionnement d'un véhicule autonome, comme mentionné précédemment, dans la direction transversale x.

La lentille optique 2 présente un axe optique X, orienté parallèlement à la direction transversale x, et correspondant à la fois sensiblement à l'axe de symétrie de la forme parabolique susmentionnée et à un grand axe de la forme sensiblement elliptique susmentionnée. La lentille est ainsi conçue pour disposer son axe optique dans un plan horizontal au sein d'un véhicule automobile positionné sur un plan horizontal.

Préférentiellement, l'axe optique X est également l'axe principal du faisceau émis par la source de lumière 5, c'est-à-dire l'axe sur lequel l'intensité lumineuse est la plus forte. En remarque, selon un mode de réalisation, plusieurs sources de lumière 5 pourraient être agencées à proximité les unes des autres, autour de l'axe optique X, pour permettre la génération d'un éclairage de plus forte puissance. Pour simplifier la description, nous considérerons par la suite la présence d'une seule source de lumière, sachant qu'elle pourrait être en pratique formée par la réunion de plusieurs sources de lumière distinctes.

Plus précisément, la source de lumière 5 est positionnée au niveau du plan focal de la lentille 2, c'est-à-dire au niveau d'un plan situé sur la focale objet de la lentille 2 et perpendiculaire à l'axe optique X. Plus précisément encore, la source de lumière 5 est agencée au niveau du foyer objet F de la lentille 2, située au voisinage du dioptre d'entrée 3, à l'intersection entre l'axe optique X et le plan focal P.

La source de lumière 5 peut comprendre une diode électroluminescente comprenant une surface émettrice 6 capable d'émettre de la lumière vers le dioptre d'entrée 3 de la lentille 2. Préférentiellement, la surface émettrice 6 est agencée parallèlement au plan focal P de la lentille 2 et coupe l'axe optique X. Très préférentiellement, la surface photoémettrice 6 est accolée au dioptre d'entrée 3. Le dioptre d'entrée 3 représenté est plat et s'étend entièrement en avant de la surface photoémettrice 6 de la source de lumière 5.

La lentille 2 peut comprendre, entre le dioptre d'entrée 3 et le dioptre de sortie 4, une face latérale 7, de préférence agencée pour contenir la totalité du cône d'émission formé par les rayons lumineux émis par la source de lumière 5 et se propageant dans la lentille 2. Préférentiellement, la face latérale 7 est sensiblement parallèle au cône d'émission formé par les rayons lumineux émis par la source de lumière 5 et se propageant dans la lentille 2. La face latérale 7 peut présenter une forme sensiblement divergeant vers le dioptre optique de sortie 4 de la lentille 2.

La face latérale 7 peut être formée de plusieurs facettes jointives 8 par des arêtes 11 s'étendant sur la longueur de la face 7, du dioptre d'entrée 3 au dioptre de sortie 4.

Comme illustré sur la figure 2, l'intersection du dioptre de sortie 4 par un plan vertical comprenant l'axe optique X comprend deux arcs d'ellipse, un arc d'ellipse supérieur 41 et un arc d'ellipse inférieur 42.

Chaque arc d'ellipse 41, 42 présente un foyer objet (non-représenté) confondu avec le foyer objet F de la lentille 2. Chaque arc d'ellipse 41, 42 présente le même centre d'ellipse O situé sur l'axe optique X.

Préférentiellement, le dioptre de sortie 4 consiste en ces deux arcs d'ellipse 41, 42. Les deux arcs d'ellipse 41, 42 sont préférentiellement adjacents. Préférentiellement, la frontière entre les deux arcs d'ellipse 41, 42 est continue. Dans un mode de réalisation, les deux arcs d'ellipse 41, 42 s'étendent chacun d'un côté de l'axe optique X. La frontière entre les deux arcs d'ellipse 41, 42 peut comprendre un point de l'axe optique X.

Il existe une forme particulière d'un tel dispositif optique, qui sera considéré comme le dispositif optique de référence 100, illustré par la figure 3, comprenant une lentille de référence 102 dont l'intersection du dioptre de sortie de référence 104 par un plan vertical comprenant l'axe optique présente un arc d'ellipse de référence 143, et dont l'ellipse correspondante présente un foyer confondu avec le foyer objet F de la lentille. L'arc d'ellipse de référence 143 peut être défini par la longueur de son petit axe OM1 ou OM'1, où O est le centre de l'ellipse et les points de référence M1 et M'1 sont les extrémités opposées au niveau des deux petits axes de l'ellipse de référence 143. Les trois points O, M1 et M'1 sont alignés selon une direction verticale.

Le dioptre de sortie de référence 104 comprend un arc d'ellipse dont la longueur du petit axe de référence OM1 ou OM'1 est configurée de manière à ce que les rayons lumineux 153 issus de la source lumineuse 5 et transmis par le dioptre de sortie de référence 104 soient parallèles entre eux et parallèles à l'axe optique X.

Cette longueur particulière est fonction de la distance focale f de la lentille ainsi que de l'indice de réfraction n du matériau de la lentille et de la demi-longueur du grand axe a.

La distance FM1 permettant d'obtenir un arc d'ellipse en dioptre de sortie permettant d'obtenir de tels rayons parallèles à l'axe optique X est donnée par l'équation suivante :

[Math. 1]

$$FM1 = \sqrt{a^2(a-f)^2}$$

[Math. 2]

$$a = \frac{(1-n)f}{2 - {}^{1}/_{n} - n}$$

A partir de FM1, on peut facilement obtenir la longueur du petit axe OM1 de l'arc d'ellipse par la relation suivante :

[Math. 3]

$$OM1 = \sqrt{FM1^2 - (a-f)^2}$$

Les figures 4 à 6 illustrent des modes de réalisation d'une lentille pour un dispositif optique dans une vue de côté, c'est-à-dire par une coupe par un plan vertical comprenant l'axe optique.

La figure 4 illustre un dispositif optique 1 selon un premier mode de réalisation.

Dans ce premier mode de réalisation, l'excentricité de l'arc d'ellipse supérieur 41 du dioptre de sortie 4 est diminuée par rapport à l'excentricité d'un arc d'ellipse autorisant les rayons lumineux issus du dioptre de sortie 4 à être parallèles (en pointillé sur la figure 4), c'est-à-dire par rapport à l'ellipse de référence de la figure 3 décrite ci-dessus.

Autrement dit, dans ce mode de réalisation, la distance du petit axe de l'arc d'ellipse supérieur OM2 est inférieure à la distance de référence OM1 permettant d'obtenir des rayons réfractés parallèles entre eux. Ainsi, les rayons lumineux 51 issus de la source de lumière 5 et transmis par l'arc d'ellipse supérieur 41 du dioptre de sortie 4 sont déviés de manière à être orientés vers l'axe optique X dans un plan vertical. Les rayons lumineux 51 issus de la source de lumière 5 et réfractés par l'arc d'ellipse supérieur 41 du dioptre de sortie 4 sont ainsi déviés de manière à converger plus rapidement sur le sol lorsque le dispositif optique est agencé dans une zone latérale d'un véhicule.

L'arc d'ellipse supérieur 41 du dioptre de sortie 4 conserve une continuité avec l'arc d'ellipse inférieur 42 au niveau de leur intersection avec l'axe optique X.

La distance OM2 du petit axe de l'arc d'ellipse supérieur 41 est inférieure à la distance OM1 permettant d'obtenir des rayons réfractés parallèles à l'axe optique X, c'est-à-dire au petit axe de l'ellipse de référence 143 du dioptre de sortie 104 de référence. Préférentiellement, la distance OM2 du petit axe de l'arc d'ellipse supérieur est inférieure à la distance OM1 de référence d'au moins 0,2 mm, voire est inférieure à cette distance de référence d'une distance comprise entre 0, 2 mm et 3 mm. En variante, cette longueur du petit axe de l'arc d'ellipse supérieur selon le premier mode de réalisation de l'invention est réduite d'au moins 5%, voire d'au moins 10%, par rapport à cette longueur de l'arc d'ellipse de référence.

Par exemple, la valeur de OM1 est d'environ 13,5 mm et la valeur de OM2 est d'environ 12,2 mm.

Dans ce premier mode de réalisation, l'arc d'ellipse inférieur 42 correspond à l'arc d'ellipse de référence 143 décrite précédemment.

La figure 5 illustre un dispositif optique 1 selon un deuxième mode de réalisation.

Dans ce deuxième mode de réalisation, l'excentricité de l'arc d'ellipse inférieur 42 est accentuée par rapport à l'excentricité d'un arc d'ellipse de référence, autorisant les rayons lumineux issus du dioptre de sortie 4 à être parallèles entre eux selon la direction de l'axe optique X (en pointillé sur la figure 5).

Autrement dit, dans ce mode de réalisation, la distance du petit axe de l'arc d'ellipse inférieur OM'2 est supérieure à la distance de référence OM'1 permettant d'obtenir des rayons réfractés parallèles entre eux. Ainsi, les rayons lumineux 52 issus de la source de lumière 5 et réfractés par l'arc d'ellipse inférieur 42 du dioptre de sortie 4 sont déviés en direction opposée de l'axe optique X dans un plan vertical. Les rayons lumineux 52 réfractés par l'arc d'ellipse inférieur 42 du dioptre de sortie 4 convergent ainsi vers le sol sur lequel repose le véhicule dans un plan vertical. Ils permettent par exemple un éclairage à proximité immédiate d'un véhicule.

L'arc d'ellipse inférieur 42 du dioptre de sortie 4 conserve une continuité avec l'arc d'ellipse supérieur 41 au niveau de leur intersection avec l'axe optique X.

La distance OM'2 du petit axe de l'arc d'ellipse inférieur 42 est supérieure à la distance de référence OM'1 permettant d'obtenir des rayons réfractés parallèles à l'axe optique X. Préférentiellement, la distance OM'2 du petit axe de l'arc d'ellipse inférieur est supérieure à la distance de référence OM'1 d'au moins 0,3 mm, voire d'une longueur comprise entre 0, 3 mm et 6 mm. En variante, cette longueur du petit axe de l'arc d'ellipse inférieur selon le premier mode de réalisation de l'invention est augmentée d'au moins 5%, voire d'au moins 10%, par rapport à cette longueur de l'arc d'ellipse de référence.

Par exemple, la valeur de OM'1 est d'environ 13,5 mm et la valeur de OM'2 est d'environ 16,2 mm.

Dans ce deuxième mode de réalisation, l'arc d'ellipse supérieur 41 correspond à l'arc d'ellipse de référence 143 décrite précédemment.

La figure 6 illustre un dispositif optique 1 selon un troisième mode de réalisation représentant l'invention.

Dans ce troisième mode de réalisation, l'arc d'ellipse supérieur 41 du dioptre de sortie 4 est similaire à celui du premier mode de réalisation décrit ci-avant et illustré sur la figure 4. De plus, dans ce troisième mode de réalisation, l'arc d'ellipse inférieur 42 du dioptre de sortie 4 est similaire à celui du deuxième mode de réalisation décrit ci-avant et illustré par la figure 5.

Les rayons lumineux 51, 52 issus de la lentille 2 sont ainsi tous déviés vers le bas, et donc vers le sol sur lequel repose un véhicule. Ce mode de réalisation permet avantageusement d'éclairer des parties de la route très proches du véhicule, par exemple les zones latérales du véhicule, sans pour autant devoir incliner le dispositif optique, dont l'axe optique X reste horizontal.

Selon un autre mode de réalisation, un dispositif optique peut comprendre plusieurs lentilles, identiques ou différentes. La figure 7 illustre un tel mode de réalisation, dans lequel un dispositif optique 1 comprend deux lentilles 2 selon la présente invention

Le dispositif optique 1 peut comprendre plusieurs lentilles 2 dont les axes optiques sont tous inclus dans un même plan horizontal, les plans focaux P de chaque lentille 2 pouvant être sécants de manière à augmenter le faisceau de projection des rayons lumineux 55 du système optique 10.

Dans un mode de réalisation, par « arc d'ellipse », on entend une portion présentant sensiblement une forme d'arc d'ellipse.

Naturellement, l'invention ne se limite pas aux modes de réalisation décrits. Notamment, le dioptre de sortie 4 pourrait présenter une autre forme sensiblement en arc d'ellipse ou sensiblement en arc d'ellipse par des coupes par un plan vertical latéral, c'est-à-dire par un plan vertical parallèle à l'axe optique du dispositif optique. Ainsi, la partie supérieure, au-dessus de l'axe optique, d'une telle section du dioptre de sortie 4 pourrait présenter une forme en arc d'ellipse ou en quasi forme d'ellipse, inscrite à l'intérieur du contour de référence défini en relation avec la figure 3, de sorte à rabattre vers l'axe optique les rayons issus du dioptre de sortie 4. Inversement, en complément ou en variante, la partie inférieure d'une telle section par un même plan vertical du dioptre de sortie 4 pourrait comprendre une forme en arc d'ellipse ou en quasi forme d'ellipse, inscrite à l'extérieur du contour de référence défini en relation avec la figure 3, de sorte à rabattre les rayons issus du dioptre de sortie 4 en direction opposée de l'axe optique. Les adjectifs « intérieur » et « extérieur » s'entendent relativement à la lentille 2. Finalement, le dioptre de sortie peut présenter toute forme sensiblement elliptique comprise entre l'ellipse de référence définie précédemment et une deuxième ellipse formée par une réduction de la longueur du petit axe de l'ellipse de référence de 30% en partie supérieure ou une augmentation de la longueur du petit axe de l'ellipse de référence de 30% en partie inférieure. Il est ainsi possible de former une multitude de modes de réalisation.

L'invention porte aussi sur un système d'éclairage 10 destiné à être monté sur le bas de caisse d'un véhicule, notamment d'un véhicule automobile, comprenant plusieurs dispositifs optique 1 tels que décrits précédemment. Elle porte enfin sur un véhicule automobile, de préférence autonome, comprenant un ou plusieurs dispositifs optiques ou systèmes d'éclairage tels que décrits précédemment et agencés en partie basse et latérale du véhicule automobile.

## Revendications

**1.** Dispositif optique (1) pour véhicule comprenant :

- au moins une lentille (2) comprenant un axe optique et un dioptre de sortie (4) et un dioptre d'entrée (3) ; et
- une source de lumière (5) agencée pour émettre de la lumière vers le dioptre d'entrée (3) de la au moins une lentille (2), la au moins une lentille présentant un foyer objet (F) situé sensiblement sur le dioptre d'entrée (3) de la lentille (2), au niveau de son axe optique,

une section du dioptre de sortie (4) par un plan vertical parallèle à l'axe optique de la au moins une lentille (2) comprenant plusieurs arcs d'ellipse ou sensiblement d'ellipse, modifiés par rapport à une forme elliptique de référence dans laquelle tous les rayons issus de la source de lumière (5) seraient émis parallèlement à l'axe optique de la au moins une lentille (2) en sortie d'un dioptre de sortie (4) de référence, la forme elliptique de référence ayant un petit axe de longueur OM1, **caractérisé en ce que** cette modification étant

pour un arc d'ellipse supérieur que la longueur OM2 du petit axe d'ellipse correspondant soit inférieur à OM1 et cette modification étant pour un arc d'ellipse inférieur que la longueur OM'2 du petit axe d'ellipse correspondant soit supérieur à OM1, telle que les rayons issus du dioptre de sortie (4) sont tous orientés vers un plan horizontal parallèle à l'axe optique, aptes à éclairer un sol sur lequel reposerait un véhicule sur lequel serait monté le dispositif optique (1).

**2.** Dispositif optique (1) selon la revendication précédente, **caractérisé en ce qu'**une section de la partie supérieure du dioptre de sortie (4) de la au moins une lentille (2) par un plan vertical parallèle à l'axe optique de la au moins une lentille (2) comprend un ou plusieurs arcs d'ellipse ou sensiblement d'ellipse, modifiés par rapport à une forme elliptique de référence dans laquelle tous les rayons seraient émis parallèlement à l'axe optique de la au moins une lentille (2), de sorte que tout ou partie des rayons émis par la partie supérieure de la au moins une lentille (2) sont inclinés vers l'axe optique de la au moins une lentille (2), et **en ce qu'**une section de la partie inférieure du dioptre de sortie (4) de la au moins une lentille (2) par un plan vertical parallèle à l'axe optique de la au moins une lentille (2) comprend un ou plusieurs arcs d'ellipse ou sensiblement d'ellipse, modifiés par rapport à une forme elliptique de référence dans laquelle tous les rayons seraient émis parallèlement à l'axe optique de la au moins une lentille (2), de sorte que tout ou partie des rayons émis par la partie inférieure de la au moins une lentille (2) sont inclinés de sorte à s'éloigner de l'axe optique de la au moins une lentille (2).

**3.** Dispositif optique (1) selon l'une des revendications précédentes, **caractérisé en ce qu'**une section de la partie supérieure du dioptre de sortie (4) de la au moins une lentille (2) par un plan vertical parallèle à l'axe optique de la au moins une lentille (2) comprend un ou plusieurs arcs d'ellipse ou sensiblement d'ellipse, inscrit(s) entre un contour elliptique de référence par lequel tous les rayons seraient émis parallèlement à l'axe optique de la au moins une lentille (2) et un contour elliptique obtenu par une réduction de 30% de la longueur du petit axe du contour elliptique de référence, et/ou **en ce qu'**une section de la partie inférieure du dioptre de sortie (4) de la au moins une lentille (2) par un plan vertical parallèle à l'axe optique de la au moins une lentille (2) comprend un ou plusieurs arcs d'ellipse ou sensiblement d'ellipse, inscrit(s) entre un contour elliptique de référence par lequel tous les rayons seraient émis parallèlement à l'axe optique de la au moins une lentille (2) et un contour elliptique obtenu par une augmentation de 30% de la longueur du petit axe du contour elliptique de référence.

**4.** Dispositif optique (1) selon une des revendications précédentes, **caractérisé en ce que** la longueur du petit axe de l'arc d'ellipse supérieur (41) est inférieure de 5 à 30% à la longueur du petit axe d'un arc d'ellipse de référence.

**5.** Dispositif optique (1) selon une des revendications précédentes, **caractérisé en ce que** la longueur du petit axe de l'arc d'ellipse inférieur (42) est supérieure de 5 à 30% à une longueur du petit axe d'un arc d'ellipse de référence.

**6.** Dispositif optique (1) selon l'une des revendications précédentes, **caractérisé en ce que** le dioptre de sortie (4) est agencé perpendiculairement à l'axe

**7.** Dispositif optique (1) selon l'une des revendications précédentes, **caractérisé en ce que** la source de lumière (5) est disposée à proximité du dioptre d'entrée (3), la distance entre la source de lumière (5) et le dioptre d'entrée (3) étant notamment inférieure à 10mm.

**8.** Dispositif optique (1) selon l'une des revendications précédentes, **caractérisé en ce que** la source de lumière (5) est accolée au dioptre d'entrée (3).

**9.** Dispositif optique (1) selon l'une des revendications précédentes, **caractérisé en ce que** la lentille (2) comprend, entre le dioptre d'entrée (3) et le dioptre de sortie (4), une face latérale (7), de préférence agencée pour contenir la totalité du cône d'émission formée par les rayons lumineux émis par la source de lumière (5) et se propageant dans la lentille (2).

**10.** Dispositif optique (1) selon l'une des revendications précédentes, **caractérisé en ce qu'**une section du dioptre de sortie (4) par un plan horizontal contenant l'axe optique présente une forme sensiblement parabolique.

**11.** Système d'éclairage (10), destiné à être monté sur le bas de caisse d'un véhicule, notamment d'un véhicule automobile, comprenant plusieurs dispositifs optique (1) selon l'une des revendications précédentes.

**12.** Véhicule automobile, notamment autonome ou semi-autonome, **caractérisé en ce qu'**il comprend un ou plusieurs dispositifs optiques (1) selon l'une des revendications 1 à 10 ou un ou plusieurs systèmes d'éclairage selon la revendication précédente, agencés en partie basse et latérale du véhicule automobile.

## Patentansprüche

**1.** Optische Vorrichtung (1) für ein Fahrzeug, umfassend:

• mindestens eine Linse (2) mit einer optischen Achse, einer Austrittsdioptrie (4) und einer Eintrittsdioptrie (3); und
• eine Lichtquelle (5), die so angeordnet ist, dass sie Licht in Richtung der Eintrittsdioptrie (3) der mindestens einen Linse (2) aussendet, wobei die mindestens eine Linse einen Objektfokus (F) aufweist, der sich im Wesentlichen auf der Eintrittsdioptrie (3) der Linse (2) in Höhe ihrer optischen Achse befindet, wobei ein Schnitt der Austrittsdioptrie (4) durch eine vertikale Ebene parallel zur optischen Achse der mindestens einen Linse (2) mehrere Ellipsenbögen oder im Wesentlichen Ellipsenbögen umfasst, die in Bezug auf eine elliptische Referenzform modifiziert sind, in der alle von der Lichtquelle (5) ausgehenden Strahlen parallel zur optischen Achse der mindestens einen Linse (2) am Ausgang einer Referenzaustrittsdioptrie (4) ausgesendet würden, wobei die elliptische Referenzform eine kurze Achse der Länge OM1 aufweist, **dadurch gekennzeichnet, dass** diese Modifikation für einen oberen Ellipsenbogen so ist, dass die Länge OM2 der entsprechenden kurzen Ellipsenachse kleiner als OM1 ist, und diese Modifikation für einen unteren Ellipsenbogen so ist, dass die Länge OM'2 der entsprechenden kurzen Ellipsenachse größer als OM1 ist, so dass die von der Austrittsdioptrie (4) ausgehenden Strahlen alle auf eine horizontale Ebene parallel zur optischen Achse gerichtet sind, die geeignet ist, einen Boden zu beleuchten, auf dem ein Fahrzeug stehen würde, auf dem die optische Vorrichtung (1) montiert wäre.

**2.** Optische Vorrichtung (1) nach dem vorhergehenden Anspruch, **dadurch gekennzeichnet, dass** ein Schnitt des oberen Teils der Austrittsdioptrie (4) der mindestens einen Linse (2) durch eine vertikale Ebene parallel zur optischen Achse der mindestens einen Linse (2) einen oder mehrere Ellipsenbögen oder im Wesentlichen Ellipsenbögen umfasst, die in Bezug auf eine elliptische Referenzform modifiziert sind, in der alle Strahlen parallel zur optischen Achse der mindestens einen Linse (2) ausgesendet würden, so dass alle oder ein Teil der vom oberen Teil der mindestens einen Linse (2) ausgesendeten Strahlen zur optischen Achse der mindestens einen Linse (2) hin geneigt sind, und **dadurch gekennzeichnet, dass** ein Schnitt des unteren Teils der Austrittsdioptrie (4) der mindestens einen Linse (2) durch eine vertikale Ebene parallel zur optischen Achse der mindestens einen Linse (2) einen oder mehrere Ellipsenbögen oder im Wesentlichen Ellipsenbögen umfasst, die in Bezug auf eine elliptische Referenzform modifiziert sind, in der alle Strahlen parallel zur optischen Achse der mindestens einen Linse (2) ausgesendet würden, so dass alle oder ein Teil der vom unteren Teil der mindestens einen Linse (2) ausgesendeten Strahlen so geneigt sind, dass sie sich von der optischen Achse der mindestens einen Linse (2) entfernen.

**3.** Optische Vorrichtung (1) nach einem der vorhergehenden Ansprüche, **dadurch gekennzeichnet, dass** ein Schnitt des oberen Teils der Austrittsdioptrie (4) der mindestens einen Linse (2) durch eine vertikale Ebene parallel zur optischen Achse der mindestens einen Linse (2) einen oder mehrere Ellipsenbögen oder im Wesentlichen Ellipsenbögen umfasst, die zwischen einer elliptischen Referenzkontur, durch die alle Strahlen parallel zur optischen Achse der mindestens einen Linse (2) ausgesendet würden, und einer elliptischen Kontur, die durch eine Verringerung der Länge der kurzen Achse der elliptischen Referenzkontur um 30 % erhalten wird, eingeschrieben sind, und/oder **dadurch gekennzeichnet, dass** ein Schnitt des unteren Teils der Austrittsdioptrie (4) der mindestens einen Linse (2) durch eine vertikale Ebene parallel zur optischen Achse der mindestens einen Linse (2) einen oder mehrere Ellipsenbögen oder im Wesentlichen Ellipsenbögen umfasst, die zwischen einer elliptischen Referenzkontur, durch die alle Strahlen parallel zur optischen Achse der mindestens einen Linse (2) ausgesendet würden, und einer elliptischen Kontur, die durch eine Vergrößerung der Länge der kurzen Achse der elliptischen Referenzkontur um 30 % erhalten wird, eingeschrieben sind.

4. Optische Vorrichtung (1) nach einem der vorhergehenden Ansprüche, **dadurch gekennzeichnet, dass** die Länge der kurzen Achse des oberen Ellipsenbogens (41) um 5 bis 30 % kleiner ist als die Länge der kurzen Achse eines Referenzellipsenbogens.

5. Optische Vorrichtung (1) nach einem der vorhergehenden Ansprüche, **dadurch gekennzeichnet, dass** die Länge der kurzen Achse des unteren Ellipsenbogens (42) um 5 bis 30 % größer ist als die Länge der kurzen Achse eines Referenzellipsenbogens.

6. Optische Vorrichtung (1) nach einem der vorhergehenden Ansprüche, **dadurch gekennzeichnet, dass** die Austrittsdioptrie (4) senkrecht zur Achse angeordnet ist.

7. Optische Vorrichtung (1) nach einem der vorhergehenden Ansprüche, **dadurch gekennzeichnet, dass** die Lichtquelle (5) nahe der Eintrittsdioptrie (3) angeordnet ist, wobei der Abstand zwischen der Lichtquelle (5) und der Eintrittsdioptrie (3) insbesondere kleiner als 10 mm ist.

8. Optische Vorrichtung (1) nach einem der vorhergehenden Ansprüche, **dadurch gekennzeichnet, dass** die Lichtquelle (5) an der Eintrittsdioptrie (3) angebracht ist.

9. Optische Vorrichtung (1) nach einem der vorhergehenden Ansprüche, **dadurch gekennzeichnet, dass** die Linse (2) zwischen der Eintrittsdioptrie (3) und der Austrittsdioptrie (4) eine Seitenfläche (7) umfasst, die vorzugsweise so angeordnet ist, dass sie den gesamten Emissionskegel enthält, der durch die von der Lichtquelle (5) ausgesendeten und sich in der Linse (2) ausbreitenden Lichtstrahlen gebildet wird.

10. Optische Vorrichtung (1) nach einem der vorhergehenden Ansprüche, **dadurch gekennzeichnet, dass** ein Schnitt der Austrittsdioptrie (4) durch eine horizontale Ebene, die die optische Achse enthält, eine im Wesentlichen parabolische Form aufweist.

11. Beleuchtungssystem (10), das dazu bestimmt ist, am Schweller eines Fahrzeugs, insbesondere eines Kraftfahrzeugs, montiert zu werden, umfassend mehrere optische Vorrichtungen (1) nach einem der vorhergehenden Ansprüche.

12. Kraftfahrzeug, insbesondere autonomes oder teilautonomes Kraftfahrzeug, **dadurch gekennzeichnet, dass** es eine oder mehrere optische Vorrichtungen (1) nach einem der Ansprüche 1 bis 10 oder ein oder mehrere Beleuchtungssysteme umfasst.

## Claims

1. Optical device (1) for a vehicle comprising:

   - at least one lens (2) comprising an optical axis and an output diopter (4) and an input diopter (3); and
   - a light source (5) arranged to emit light towards the input diopter (3) of the at least one lens (2), the at least one lens having an object focus (F) located substantially on the input diopter (3) of the lens (2), at the level of its optical axis, a section of the output diopter (4) by a vertical plane parallel to the optical axis of the at least one lens (2) comprising several elliptical or substantially elliptical arcs, modified with respect to a reference elliptical shape in which all the rays originating from the light source (5) would be emitted parallel to the optical axis of the at least one lens (2) at the output of a reference output diopter (4), the reference elliptical shape having a minor axis of length OM1, **characterized in that** this modification is, for an upper elliptical arc, such that the length OM2 of the corresponding minor axis of the ellipse is less than OM1 and this modification is, for a lower elliptical arc, such that the length OM'2 of the corresponding minor axis of the ellipse is greater than OM1, such that the rays originating from the output diopter (4) are all directed towards a horizontal plane parallel to the optical axis, suitable for illuminating a ground on which a vehicle would rest on which the optical device (1) would be mounted.

2. Optical device (1) according to the previous claim, **characterized in that** a section of the upper part of the output diopter (4) of the at least one lens (2) by a vertical plane parallel to the optical axis of the at least one lens (2) comprises one or more elliptical or substantially elliptical arcs, modified with respect to a reference elliptical shape in which all the rays would be emitted parallel to the optical axis of the at least one lens (2), so that all or part of the rays emitted by the upper part of the at least one lens (2) are inclined towards the optical axis of the at least one lens (2), and **in that** a section of the lower part of the output diopter (4) of the at least one lens (2) by a vertical plane parallel to the optical axis of the at least one lens (2) comprises one or more elliptical or substantially elliptical arcs, modified with respect to a reference elliptical shape in which all the rays would be emitted parallel to the optical axis of the at least one lens (2), so that all or part of the rays emitted by the lower part of the at least one lens (2) are inclined so as to move away from the optical axis of the at least one lens (2).

3. Optical device (1) according to one of the preceding claims, **characterized in that** a section of the upper part of the output diopter (4) of the at least one lens (2) by a vertical plane parallel to the optical axis of the at least one lens (2) comprises one or more elliptical or substantially elliptical arcs, inscribed between a reference elliptical contour by which all the rays would be emitted parallel to the optical axis of the at least one lens (2) and an elliptical contour obtained by a 30% reduction in the length of the minor axis of the reference elliptical contour, and/or **in that** a section of the lower part of the output diopter (4) of the at least one lens (2) by a vertical plane parallel to the optical axis of the at least one lens (2) comprises one or more elliptical or substantially elliptical arcs, inscribed between a reference elliptical contour by which all the rays would be emitted parallel to the optical axis of the at least one lens (2) and an elliptical contour obtained by a 30% increase in the length of the minor axis of the reference elliptical contour.

4. Optical device (1) according to one of the preceding claims, **characterized in that** the length of the minor axis of the upper elliptical arc (41) is less than the length of the minor axis of a reference elliptical arc by 5 to 30%.

5. Optical device (1) according to one of the preceding claims, **characterized in that** the length of the minor axis of the lower elliptical arc (42) is greater than the length of the minor axis of a reference elliptical arc by 5 to 30%.

6. Optical device (1) according to one of the preceding claims, **characterized in that** the output diopter (4) is arranged perpendicularly to the axis.

7. Optical device (1) according to one of the preceding claims, **characterized in that** the light source (5) is arranged close to the input diopter (3), the distance between the light source (5) and the input diopter (3) being in particular less than 10 mm.

8. Optical device (1) according to one of the preceding claims, **characterized in that** the light source (5) is attached to the input diopter (3).

9. Optical device (1) according to one of the preceding claims, **characterized in that** the lens (2) comprises, between the input diopter (3) and the output diopter (4), a lateral face (7), preferably arranged to contain the entire emission cone formed by the light rays emitted by the light source (5) and propagating in the lens (2).

10. Optical device (1) according to one of the preceding claims, **characterized in that** a section of the output diopter (4) by a horizontal plane containing the optical axis has a substantially parabolic shape.

11. Lighting system (10), intended to be mounted on the rocker panel of a vehicle, in particular a motor vehicle, comprising several optical devices (1) according to one of the preceding claims.

12. Motor vehicle, in particular autonomous or semi-autonomous, **characterized in that** it comprises one or more optical devices (1) according to one of claims 1 to 10 or one or more lighting systems.

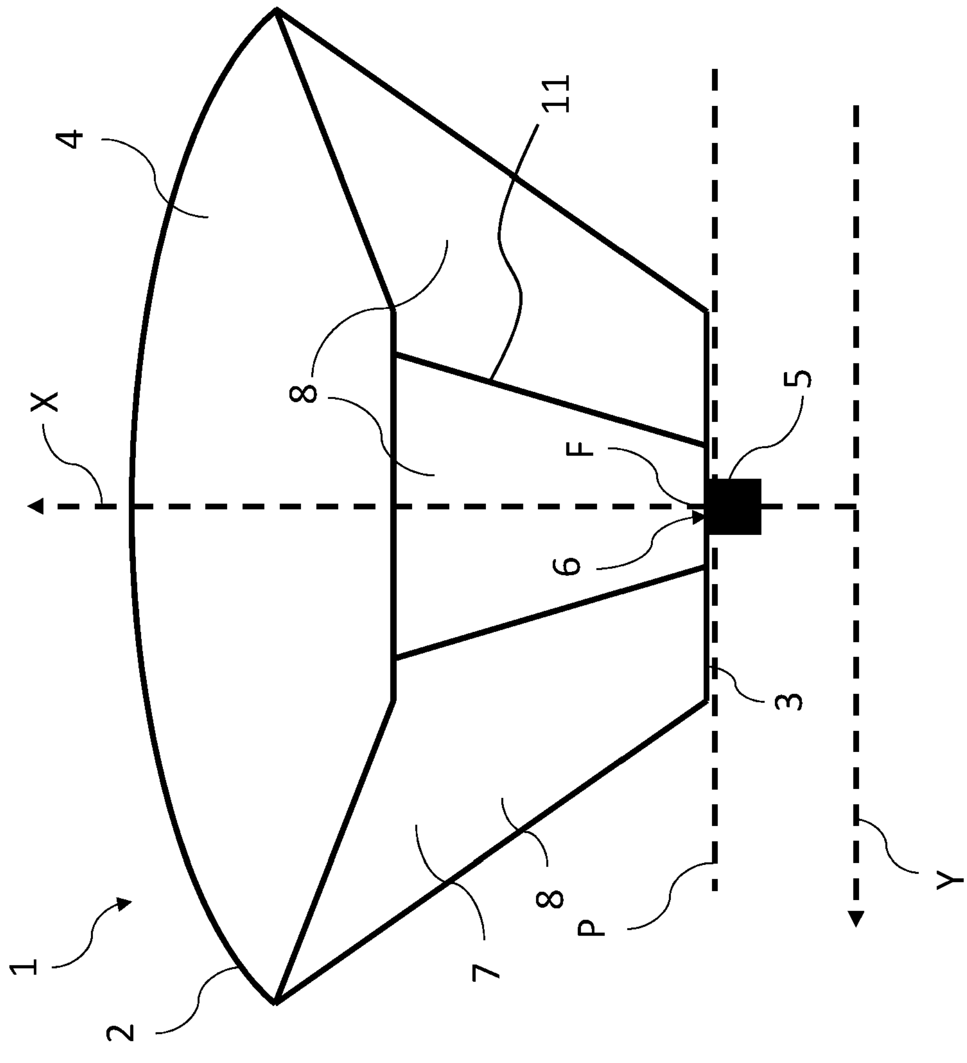


Fig. 1

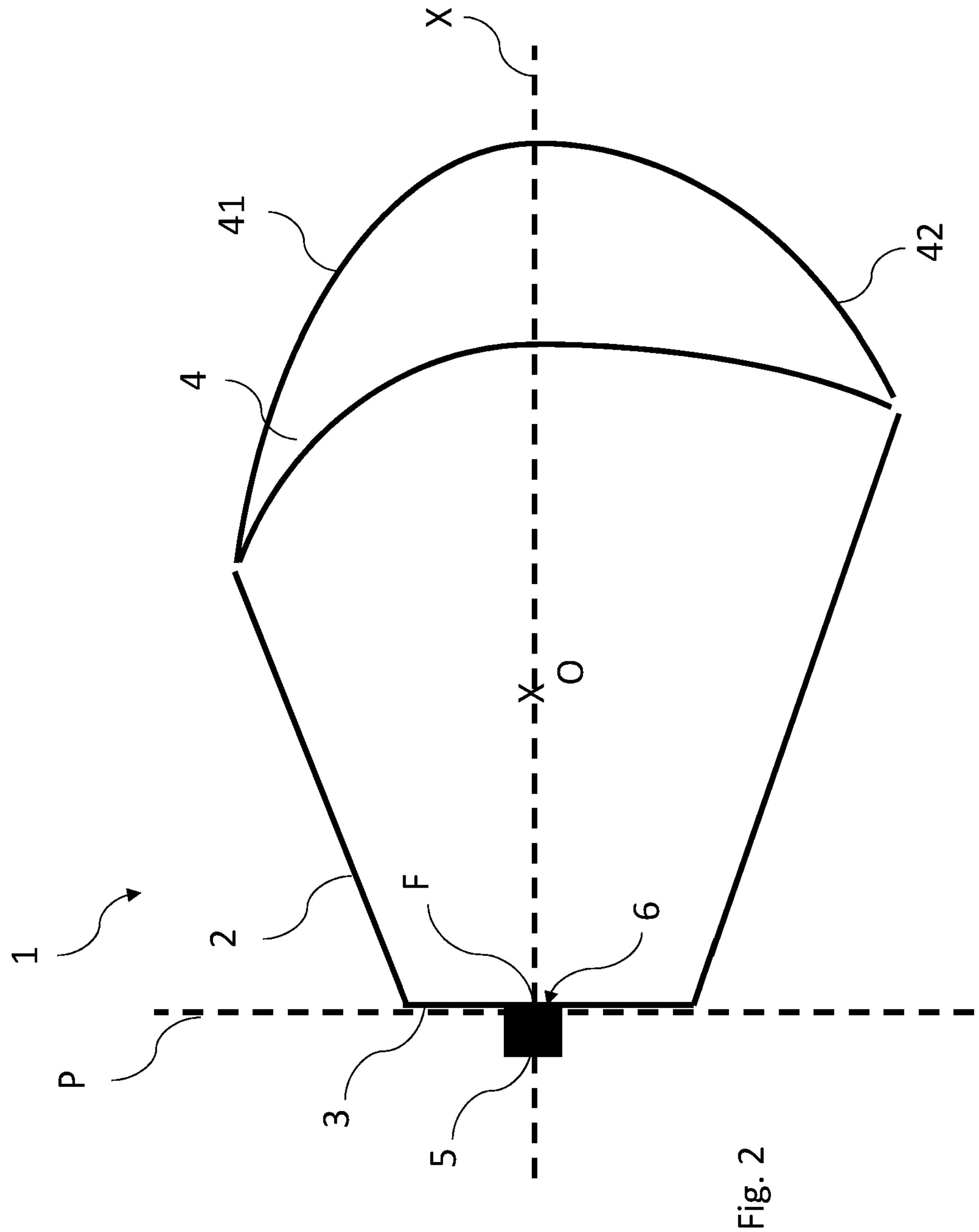

Fig. 2

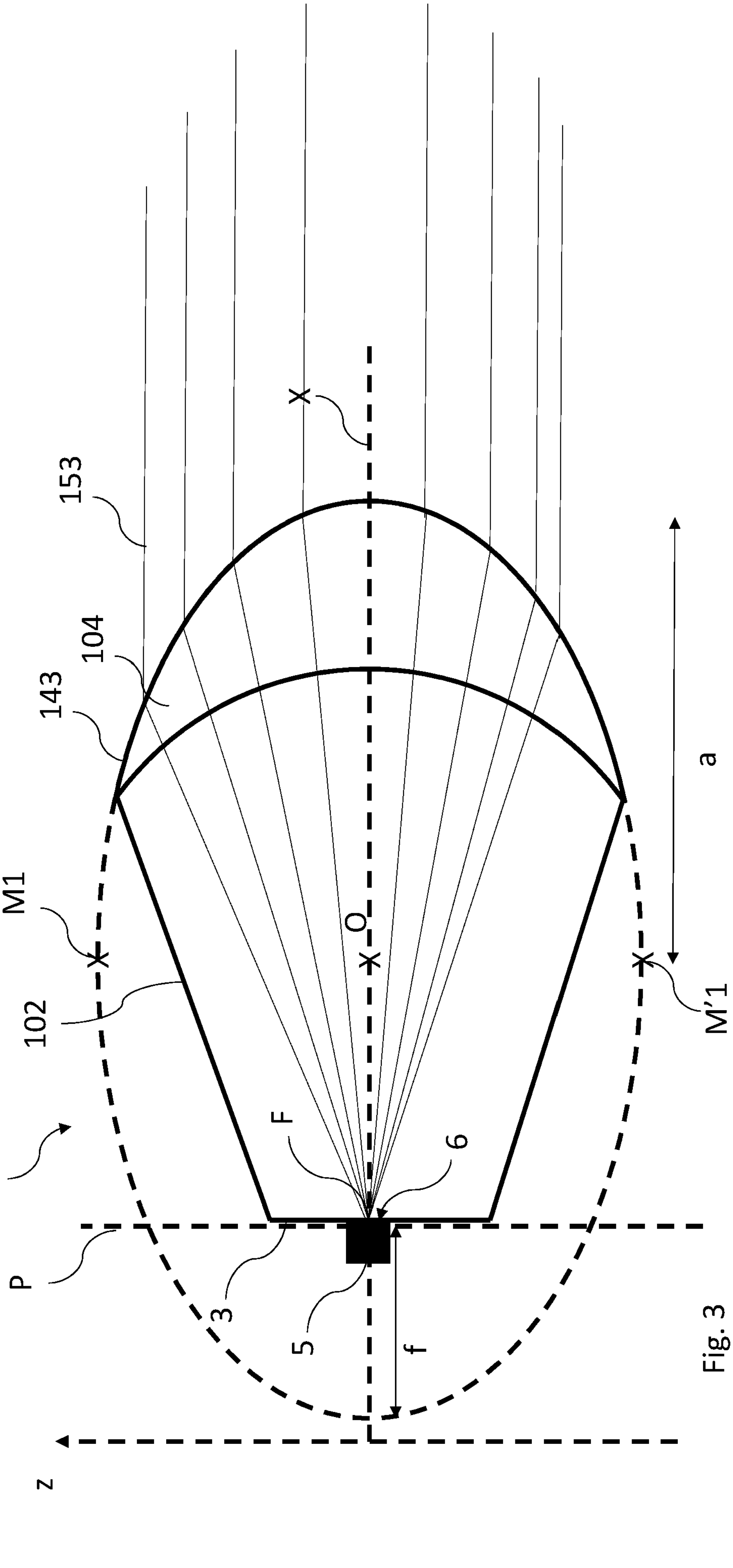


Fig. 3

4/7

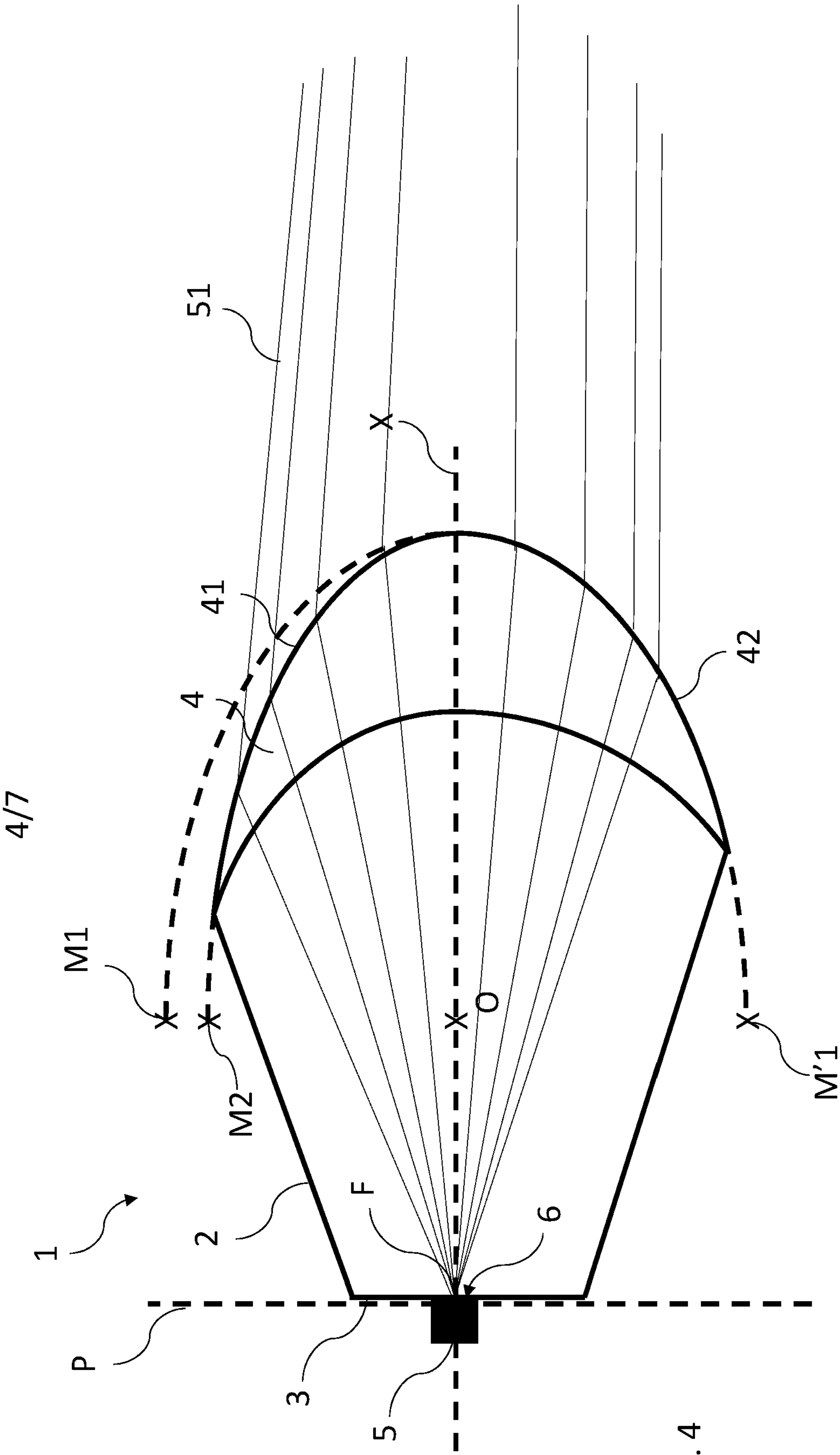


Fig. 4

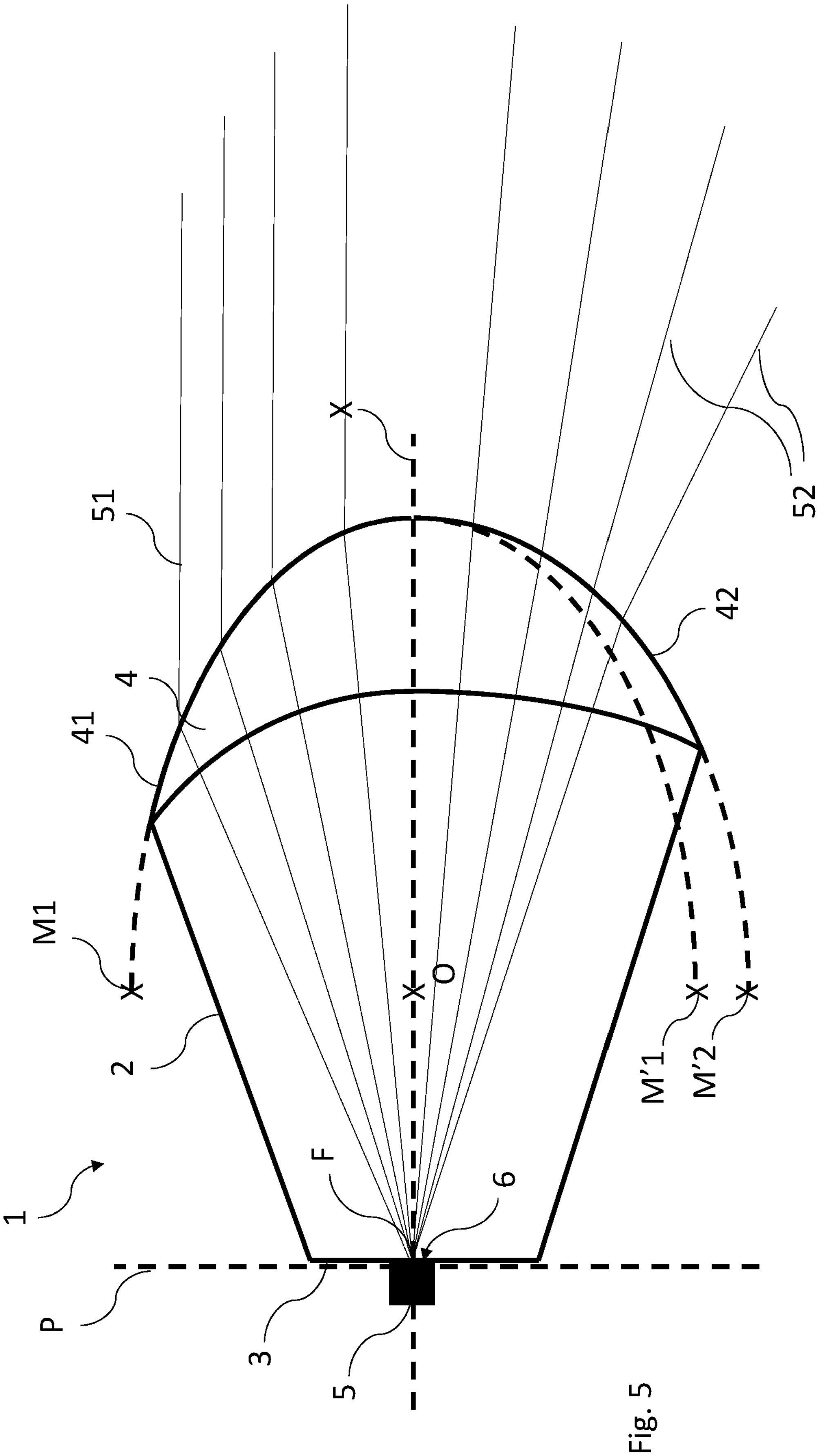


Fig. 5

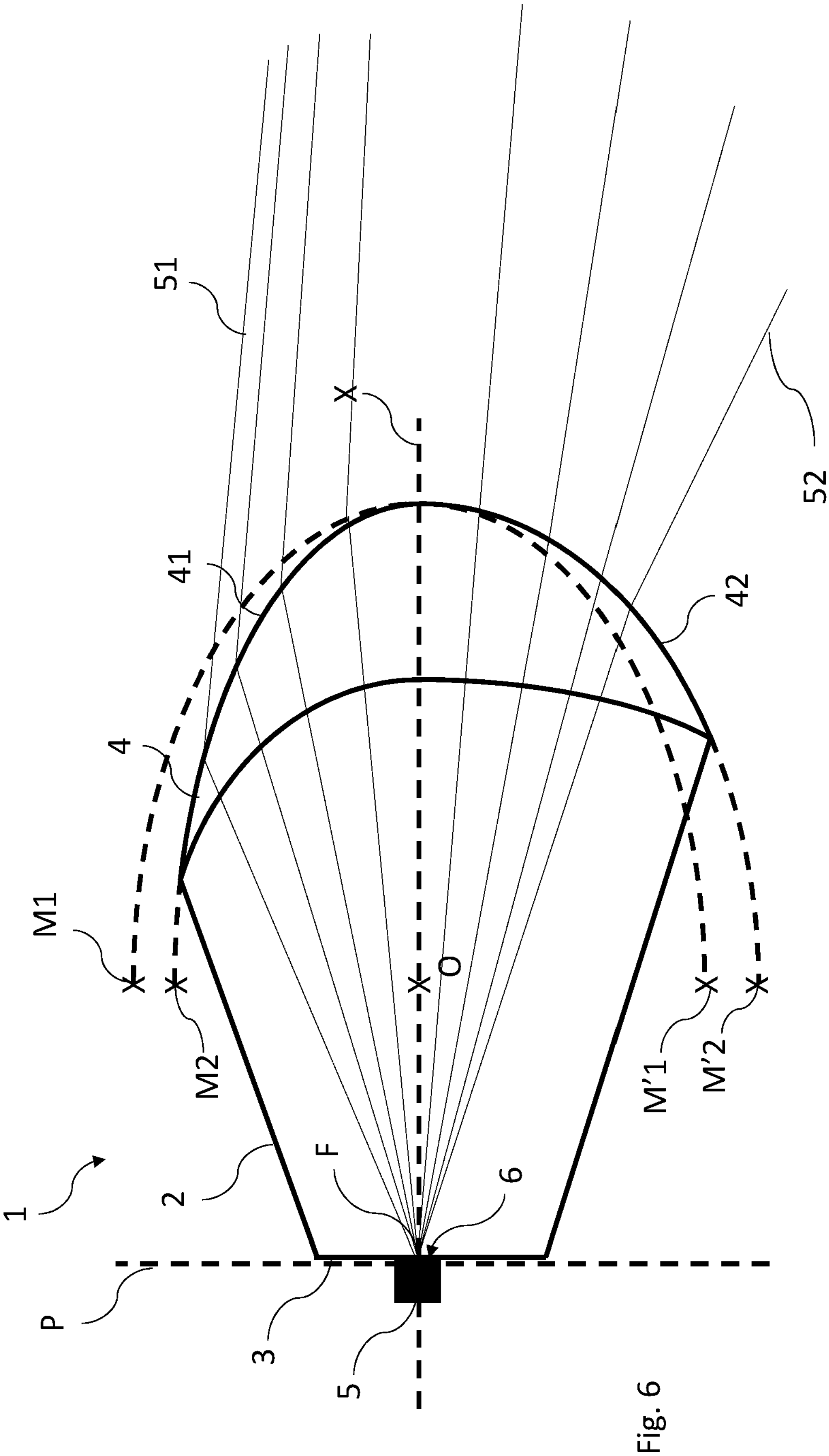


Fig. 6

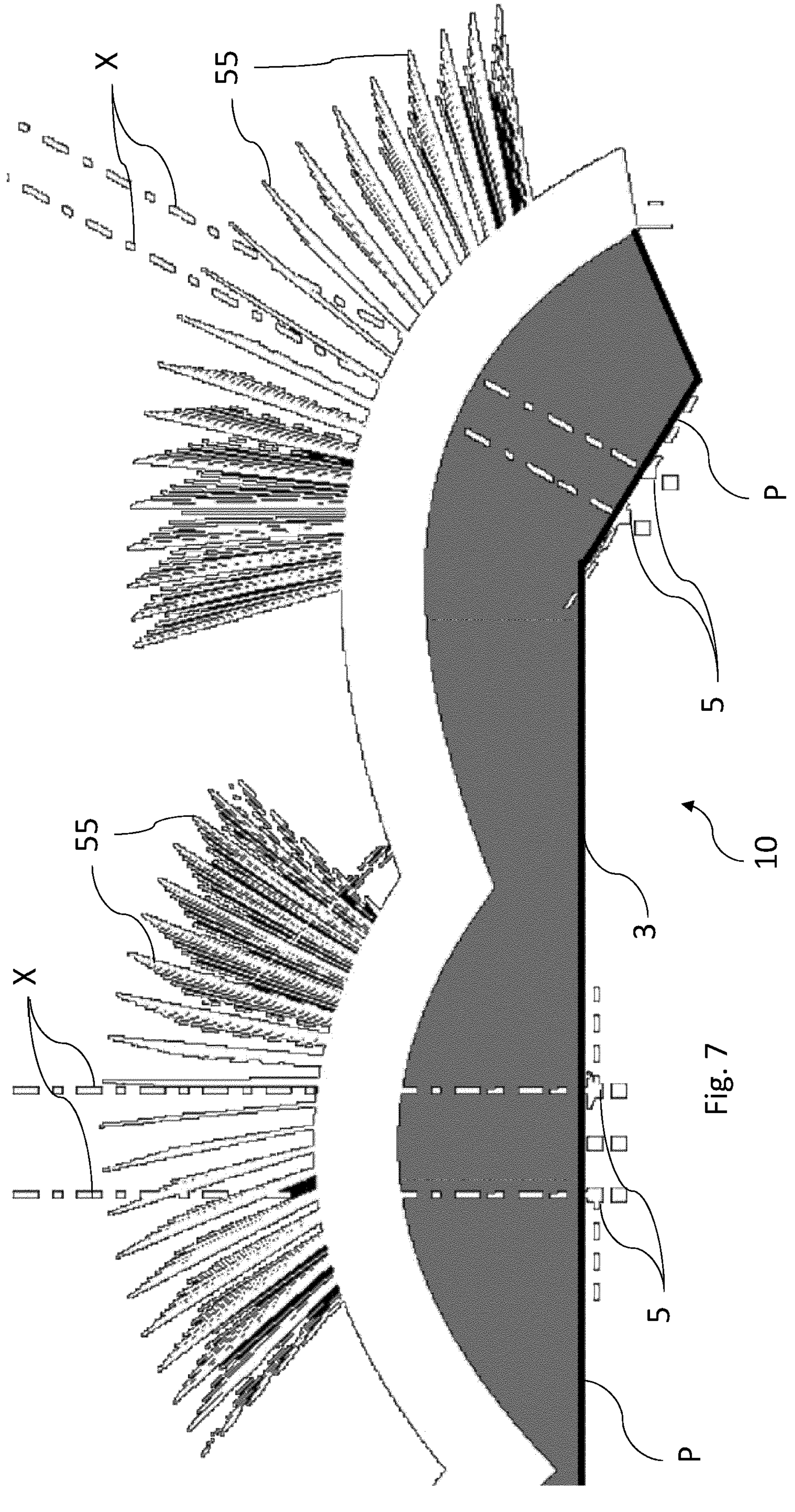


Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2016126425 A1
- EP 2770248 A1